# EUROPEAN PATENT APPLICATION

(11) **EP 0 800 100 A1**
(43) Date of publication of application: **08.10.1997**
(21) Application number: 97105114.9
(22) Date of filing: 26.03.1997
(51) Int. Cl.: G02B 6/38

(54) **Ferrule assembly for positively engaging a guide pin**

(30) Priority: 04.04.1996 US 628590
(71) Applicant: US Conec Ltd, Hickory, NC 28603-2306 (US)
(72) Inventor: Knasel, Donald Lee, Hickory, NC 28601 (US); Knight, Keith Alan, Newton, NC 28658 (US); Satake, Toshiaki, Hickory, NC 28601 (US)
(74) Representative: Altenburg, Udo, Dipl.-Phys.

(57) **Abstract**

A ferrule assembly positively engaging a guide pin includes a ferrule having a front face and an opposed rear face and defining a plurality of guide pin openings and at least one fiber opening which extend between the opposed front and rear faces of said ferrule. The ferrule assembly also includes a plurality of lengthwise extending guide pins disposed within respective ones of the guide pin openings defined by the ferrule. At least one of the guide pins has an enlarged portion having first predetermined dimensions in lateral cross-section and a recessed portion having second predetermined dimensions, less than the first predetermined dimensions, in lateral cross-section. The ferrule assembly also includes a pin clamp having an engagement portion for positively engaging the recessed portion of the at least one guide pin. The pin clamp is preferably disposed in a predetermined position relative to the ferrule such that said guide pin engaged by the pin clamp extends through a respective guide pin opening and outwardly from the front face of the ferrule.

## Description

### Field of the Invention

The present invention relates generally to guide pin retention mechanisms and, more particularly, to a ferrule assembly which positively engages an associated guide pin.

### Background of the Invention

The use of and demand for optical fiber communications continues to increase due, at least in part, to the increased bandwidth, quality and reliability of optical fiber transmission. For example, there is an increasing demand to install optical fibers, not just as trunk and distribution lines along which signals are transmitted relatively long distances within a communications system, but also directly to the home, such as in a Fiber To The Home (FTTH) system.

In order to efficiently transmit light signals between corresponding optical fibers of a pair of fiber optic cables or between the optical fibers of a fiber optical cable and an optoelectronic module or device, the corresponding optical fibers must be properly aligned. This alignment allows for the light signal to propagate through the respective optical fibers and also minimizes any loss of intensity by the light or optical signal resulting from any mismatch between the corresponding interconnected optical fibers.

In order to provide this alignment, fiber optic connectors have been developed which align either a pair or more of optical fibers to allow for efficient transmission of light or other optical signals along a predetermined transmission line or path and to provide the flexibility to route the line in or to a variety of termination points and distances. Thus, fiber optic connectors provide for the reliable transmission of optical signals to the desired termination point while maintaining at least a minimum operating level of optical signal strength.

It is common to interconnect fiber optic cables which group or contain a plurality of individual optical fibers, such as with an integrated multi-fiber optic ribbon connector. The fiber optic ribbon products which are available today are increasingly smaller, approaching the size of a strand of hair, and typically include a plurality of optical fibers such as 4, 8 or 12 optical fibers. The optical fibers of a fiber optic ribbon cable are typically disposed in a side by side or "ribbon" pattern and are generally individually encapsulated so as to optically isolate the optical fibers from the environment and from each other. Accordingly, the multi-fiber connectors employed to interconnect these fiber ribbons are relatively small and demand tight dimensional tolerances to insure that the proper alignment is maintained between the corresponding optical fibers.

A variety of standardized fiber optic connectors have been developed which are widely used in the fiber optic industry to interconnect the optical fibers employed in transmission lines. One embodiment of a multi-fiber connector is described in U.S. Patent No. 5,214,730 which issued May 25, 1993 to Shinji Nagasawa et al and is assigned to Nippon Telegraph and Telephone Corporation. As illustrated in the '730 patent, the fiber optic connector proposes to maintain alignment by employing a pair of laterally opposed bores and corresponding guide pins. As described in the 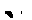 730 patent, guide pins are disposed within the bores of a first fiber optic connector such that portions of the guide pins extend outwardly from the front surface of the fiber optic connector. During the connection process, the outwardly extending portions of the guide pins can be inserted within respective apertures defined by a second fiber optic connector such that the first and second fiber optic connectors and, as a result, the respective fibers are maintained in a predetermined aligned relationship.

As such, the cylindrical guide pins extend between and align the multi-fiber connectors. The guide pins, although larger than an optical fiber, are still very small, typically in the 7-10 mm range. Thus, if the guide pin becomes displaced during the disconnection and subsequent reconnection of the fiber optic connector, the guide pins may be difficult to locate and reinsert within the respective bore.

As proposed by the '730 patent, a multi-fiber connector can include a guide pin holding member for frictionally retaining the guide pins within the connector by providing an interference or "press" fit between the guide pin holding member and the associated guide pin. As such, the guide pin holding member defines a bore for receiving the guide pin which has cross sectional area which is smaller than the guide pin. The guide pin is then pressed into the smaller bore and retained by the resulting frictional forces. Due to the reliance upon frictional engagement, however, the resulting retention force with which the guide pin is held can be relatively low, such as about 1 lb. in some instances. Thus, even though the guide pin holding member of the multi-fiber connector of the Nagasawa '730 patent frictionally engages the guide pins, the relatively low retention force provided by the guide pin holding member may still allow the guide pin to become displaced during the disconnection and subsequent reconnection of the multi-fiber connector.

For example, once in service, the multi-fiber connectors may be connected and disconnected a number of times. In the process of connecting and disconnecting the multi-fiber connectors, the guide pins can be displaced. In particular, the guide pin can be exposed to a drag force during the disassembly of a pair of mating connectors due to the frictional contact of the guide pins with the opposing connector during the withdrawal of the guide pins therefrom. Unfortunately, this drag or pulling force can provide a sufficient force to dislodge the frictionally held guide pin from the guide pin holding member.

An additional potential problem with a frictional "press-fit" guide pin retention mechanism is that even if the original guide pin is discovered and reinserted into the appropriate bore, the guide pin holding member may no longer provide the same amount of frictional retention force because the bore may have been enlarged by the previous insertion of the guide pin. Due to the reduced frictional retention force, these multi-fiber connectors may suffer even greater pin retention problems as well as potential alignment problems.

### Summary of the Invention

It is therefore an object of the present invention to provide a ferrule assembly which improves the efficiency with which optical fibers are aligned.

It is another object of the present invention to provide a ferrule assembly which positively engages one or more guide pins to thereby securely retain and to prevent inadvertent displacement of the guide pins during the subsequent connection and disconnection of the ferrule assembly.

These and other objects are provided, according to one embodiment of the present invention, by a ferrule assembly which includes a ferrule which defines at least one guide pin opening and a plurality of fiber openings through which optical fibers can extend, at least one lengthwise extending guide pin disposed within a respective guide pin opening, and a pin clamp having an engagement portion for positively engaging the guide pin. According to one embodiment, the at least one guide pin has an enlarged portion and a recessed portion such that the engagement portion of the pin clamp extends at least partially within the recessed portion of the guide pin in the absence of external forces. Due to the positive engagement of the pin clamp with the guide pin and, in one advantageous embodiment, with the recessed portion of the guide pin, the guide pin is securely retained by the ferrule assembly, such as during subsequent connection and disconnection of a multi-fiber connector which incorporates the ferrule assembly of the present invention. Thus, the guide pin will not become displaced, but will, instead, remain in position within the ferrule assembly, such as during the subsequent connection and disconnection of a multi-fiber connector incorporating the ferrule assembly.

The guide pin of one embodiment of the present invention includes an enlarged portion having first predetermined dimensions in lateral cross-section, and a recessed portion having second predetermined dimensions, less than the first predetermined dimensions, in lateral cross-section. Preferably, the enlarged portion is at a head end of the guide pin and the recessed portion is disposed along a medial segment of the guide pin and, in one advantageous embodiment, defines a groove which extends circumferentially about the guide pin. Accordingly, the engagement portion of the pin clamp of this embodiment can be received within the groove defined by the guide pin to thereby positively engage the guide pin.

The pin clamp is disposed in a predetermined position relative to the ferrule such that the guide pin engaged by the pin clamp extends through the respective guide pin opening and outwardly from the front face of the ferrule. In one embodiment, the guide pin includes a number of circumferentially extending grooves which are spaced lengthwise along the guide pin. Thus, the pin clamp and, more particularly, the engagement portion of the pin clamp of this embodiment can positively engage any one of the plurality of grooves defined by the guide pin, thereby increasing the retention force with which the guide pin is held within the ferrule assembly. By positively engaging different ones of the grooves defined by the guide pin of this embodiment, the pin clamp can control the relative position of the guide pin to the ferrule, that is, the pin clamp can control the amount by which the guide pin protrudes outwardly from the front face of the ferrule.

In one advantageous embodiment, the guide pin is cylindrical such that the enlarged portion has a first predetermined diameter in lateral cross-section and the recessed portion has a second predetermined diameter in lateral cross-section. According to this embodiment, the ratio of the second predetermined diameter to the first predetermined diameter is preferably between about 0.40 and about 0.75. By maintaining the ratio of the second predetermined diameter to the first predetermined diameter between about 0.40 and about 0.75, the guide pin will have sufficient mechanical strength to withstand the anticipated loads placed on the guide pin during service, while providing a recessed portion which is significantly smaller in lateral cross-section such that the engagement portion of the pin clamp can positively engage the recessed portion to secure the guide pin within the ferrule assembly. In addition, the guide pin can include opposed end portions which are frustoconical in shape in order to facilitate the insertion of the guide pin within a respective guide pin opening defined by the ferrule.

According to one advantageous embodiment, the ferrule defines at least one window which opens into a respective guide pin opening to thereby expose a portion of the guide pin disposed within the respective guide pin opening. According to this embodiment, the engagement portion of the pin clamp engages the portion of the guide pin exposed within the window. Preferably, the guide pin of this embodiment includes a recessed portion which is exposed within the window and is positively engaged by the engagement portion of the pin clamp.

In an alternative embodiment, the pin clamp can define an internal cavity adjacent to the engagement portion for receiving the enlarged portion of a guide pin while the engagement portion extends at least partially within the recessed portion of the guide pin. By receiving the enlarged portion of a guide pin within the internal cavity, the guide pin is further secured by the pin clamp to the resulting ferrule assembly.

In either embodiment, the engagement portion of the pin clamp can include a pair of opposed arms which define a gap of a predetermined width therebetween. The opposed arms of this embodiment of the pin clamp preferably define a predetermined width which is less than the first predetermined dimensions of the enlarged portion of the guide pin such that the pair of opposed arms can securely engage the recessed portion.

According to yet another embodiment, the pin clamp defines an opening through which the enlarged portion of the guide pin can be inserted. The engagement portion of the pin clamp of this embodiment includes a plurality of deflectable tabs which border the opening defined by the pin clamp while the deflectable tabs permit the enlarged portion of the guide pin to be inserted through the opening, the deflectable tabs securely engage and seat within the recessed portion of the guide pin, thereby securing the guide pin within the pin clamp.

Therefore, according to the various embodiments of the present invention, the ferrule assembly includes a pin clamp for securely engaging the guide pin such that the guide pin does not become displaced, such as during subsequent connection and disconnection of a multi-fiber connector which incorporates the ferrule assembly. As a result, the connection and disconnection of a multi-fiber connector incorporating the ferrule assembly of the present invention will be more efficient since the guide pins will not become displaced and will not require time consuming replacement prior to the reassembly of a pair of aligned multi-fiber connectors. For example, the guide pin of one embodiment of the present invention defines a recessed portion, such a groove, which can be positively engaged by the pin clamp so as to significantly increase the retention force with which the guide pin is held within the resulting ferrule assembly in comparison with a conventional guide pin holding member which relies solely upon frictional engagement with the guide pin.

### Brief Description of the Drawings

Figure 1 is an exploded perspective view of a multi-fiber connector which includes a ferrule assembly according to one embodiment of the present invention.

Figure 2 is a perspective view of a ferrule assembly of one embodiment of the present invention.

Figure 3 is a fragmentary perspective view of a pin clamp of the ferrule assembly of one embodiment of the present invention.

Figure 4 is a top view of the embodiment of the pin clamp illustrated in Figure 3.

Figure 5 is an end view of the embodiment of the pin clamp illustrated in Figure 3.

Figure 6 is a cross-sectional view of a portion of the pin clamp illustrated in Figure 3 taken along line 6-6 of Figure 4.

Figure 7 is a perspective view of a guide pin according to one embodiment of the present invention.

Figure 8 is a fragmentary top view of a ferrule assembly according to one embodiment of the present invention illustrating the positive engagement of the guide pins by the pin clamp and the insertion of the guide pins within respective guide pin openings defined by the ferrule according to one embodiment of the present invention.

Figure 9 is a perspective view of a guide pin according to another embodiment of the present invention.

Figure 10 is a perspective view of a guide pin according to yet another embodiment of the present invention.

Figure 11 is an exploded perspective view of a ferrule assembly according to another embodiment of the present invention.

Figure 12 is a perspective view of the ferrule assembly illustrated by Figure 11 following assembly thereof.

Figure 13 is a cross-sectional view of the ferrule assembly of Figures 11 and 12 taken along line 13-13 of Figure 12.

Figure 14 is a perspective view of a pin clamp of another embodiment of the present invention.

Figure 15 is a partial cross-sectional view of the embodiment of the pin clamp of the present invention shown in Figure 14 which illustrates the positive engagement of a pair of guide pins.

Figure 16 is a bottom view of the embodiment of the pin clamp of the present invention shown in Figure 14.

### Detailed Description of the Preferred Embodiments

The present invention will now be described more fully hereinafter with reference to the accompanying drawings, in which a preferred embodiment of the invention is shown. This invention may, however, be embodied in many different forms and should not be construed as limited to the embodiments set forth herein; rather, this embodiment is provided so that this disclosure will be thorough and complete and will fully convey the scope of the invention to those skilled in the art. Like numbers refer to like elements throughout.

The ferrule assembly **20** of the present invention is illustrated and described herein in conjunction with a multi-fiber connector. However, the ferrule assembly of the present invention can also be incorporated within a single fiber connector without departing from the spirit and scope of the present invention. In addition, the ferrule assembly of the present invention can be readily employed in applications which do not include a fiber optic connector. For example, the ferrule assembly of the present invention can align one or more optical fibers within an optoelectronic module or within a passive optical device, such as a coupler, without departing from the spirit and scope of the present invention.

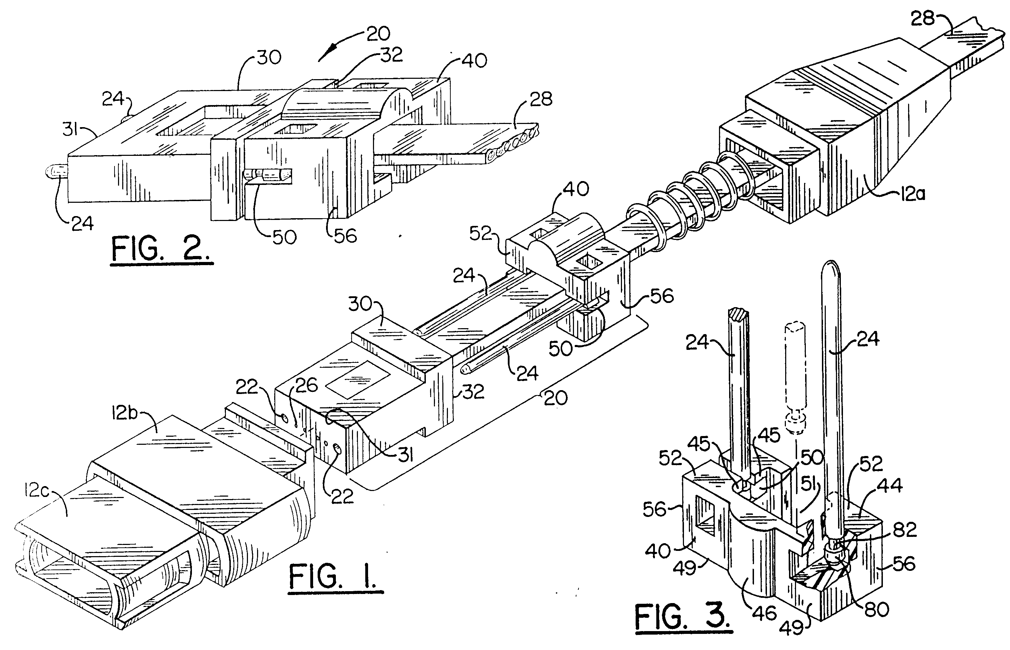

As illustrated in Figure 1, however, the ferrule assembly **20** can be incorporated within a fiber optic connector. In addition to the ferrule assembly of the present invention, a multi-fiber optic connector typically includes an inner housing **12c**, a coupling **12b** and a boot **12a** which are assembled about the ferrule assembly in a conventional manner. As shown in Figure 1, the ferrule assembly includes a plurality of guide pins **24** which extend outwardly from the front face of the ferrule assembly once the fiber optic connector is assembled. Although the plurality of guide pins as illustrated and described herein includes two guide pins, it will be appreciated that the invention is not limited thereto and is merely presented as such for ease of discussion throughout.

In use, the guide pins **24** which extend outwardly from the front face of the ferrule assembly **20** of the present invention are adapted to be inserted into corresponding guide pin openings which are defined by another fiber optic connector such that a pair of fiber optic connectors and, in turn, the optical fibers of each of the fiber optic connectors are aligned in a predetermined manner. As is known in the art, a fiber optic connector can also include springs and other alignment mechanisms to insure that the respective fiber optic connectors are spaced in a tightly abutting manner to minimize signal leakage between the aligned fiber optic connectors.

As illustrated by Figures 1 and 2, the fiber optic connector includes the ferrule assembly **20** of the present invention. The ferrule assembly, in turn, includes a ferrule **30**, a pin clamp **40**, and a plurality of lengthwise extending guide pins **24**. The ferrule is preferably made out of a molded plastic material and, in one embodiment, includes a mixture of about 20% phenylic resin by weight and 80% aggregate filler, such as silica, by weight. As best illustrated by Figure 1, the ferrule is configured to provide a plurality of guide pin openings **22** as well as at least one fiber optic opening **26**, each opening extending between the opposed front and rear faces **31**, **32**. As such, when the ferrule assembly is assembled, the guide pins typically extend through respective ones of the guide pin openings and outwardly from the front face **31** of the ferrule as shown in Figure 2.

As shown in Figures 1 and 2, a plurality of optical fibers, typically in the form of a fiber optic ribbon **28**, are also inserted through the ferrule **30** generally at an earlier point in the assembly process than the insertion of the guide pins **24** as known by those skilled in the art. Typically, the fibers are positioned and engaged (such as by epoxy or glue) at least partially within respective ones of the fiber optic openings **26** defined by the ferrule **30** such that end portions of the optical fibers are exposed through the front face **31** of the ferrule. The fiber optic ribbon is typically truncated at the front face of the connector to provide the necessary optical communication with a mating connector. The truncated fibers can also be processed to provide the necessary definition of the individual optical fibers at the front face of the connector. This additional processing can include high precision machining and polishing or etching with a slurry or the like so as to expose highly polished fibers in respective openings defined in the front face of the ferrule. A predetermined length of fiber optic ribbon also extends from the rear face **32** of the ferrule.

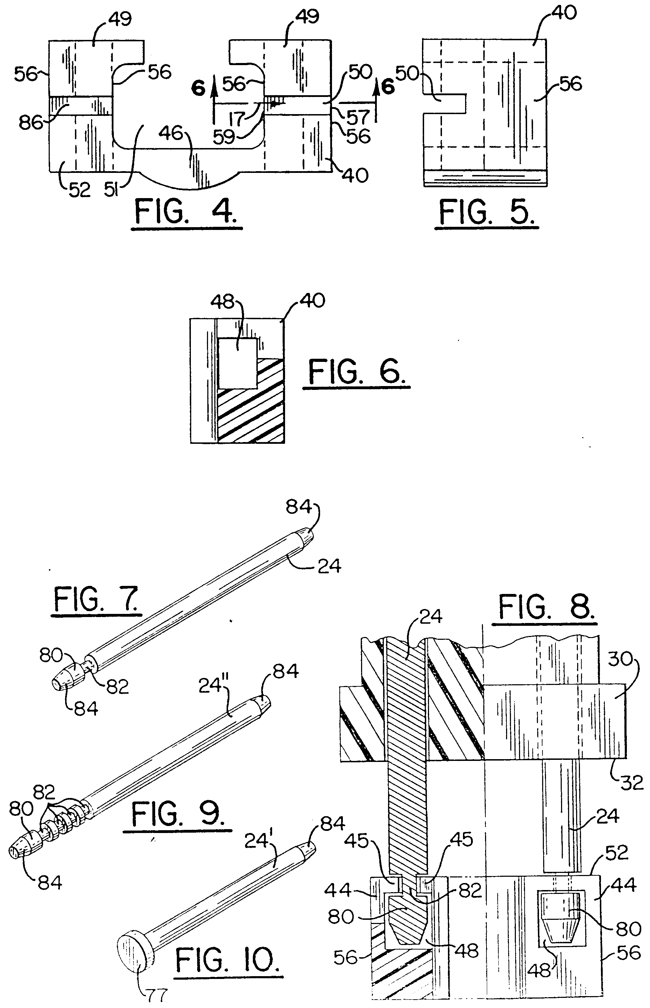

The ferrule assembly **20** of the present invention also includes at least one guide pin **24**. As shown in Figures 7, 9 and 10, the various embodiments of the guide pin each include an enlarged portion **80** having first predetermined dimensions in lateral cross-section and at least one recessed portion **82** having second predetermined dimensions, less than the first predetermined dimensions, in lateral cross-section. Preferably, the enlarged portion is disposed at one end of the guide pin and the recessed portion is disposed along a medal segment of the guide pin. Although the enlarged portion of the guide pin is larger than the recessed portion of the guide pin, the enlarged portion of one advantageous embodiment of the guide pin has the same general dimensions, in lateral cross-section, as the body or shaft of the guide pin as shown in Figure 7.

According to the present invention, the pin clamp **40** retains and positively engages a portion of the guide pin **24**. In order to positively engage the guide pin, the pin clamp includes an engagement portion **44** which provides positive retention forces which, in one advantageous embodiment, are about 6 to about 12 times greater than the retention forces provided by conventionally retained assemblies.

In the embodiment of the pin clamp **40** illustrated by Figures 3 and 8, the engagement portion **44** includes a pair of opposed arms **45** which define a slot **50** therebetween. The slot includes an enlarged interior portion sized to receive the enlarged portion **80** of a guide pin **24**. The slot also opens through the front face **52** of the pin clamp so as to define a gap having a predetermined width which smaller than the lateral cross-sectional dimensions of the enlarged portion of a guide pin. As shown in Figures 3-6, the slot also opens through the sidewalls **56** of the pin clamp so as to receive an end portion of a guide pin during the assembly of the ferrule assembly **20** as described below.

In operation and as best illustrated by Figure 3, one end of a guide pin **24** is inserted into the slot **50** such that the enlarged portion **80** of the guide pin is locked into the slot by the engagement portion **44** of the pin clamp in a manner which positively engages the guide pin and prevents the guide pin from dislodging or moving in the axial direction. Following engagement by the pin clamp, the guide pin extends outwardly (axially) from the front face **52** of the pin clamp as shown in Figure 3.

Referring to the embodiment of the pin clamp **40** shown in Figure 4, the slot **50** opens through at least part of a sidewall **56** and at least part of a front surface **52** of the pin clamp. Preferably, the slot extends across the entire front surface and a portion of the sidewall. According to this embodiment, a portion of the slot is preferably defined by the opposed arms **45** of the engagement portion **44** which are configured to adaptably receive and lock into the recessed portion **82** of a guide pin **24**.

Thus, in this exemplary embodiment of the pin clamp **40**, a guide pin **24** can be inserted through an entry point which is typically defined by the portion of the slot **50** which opens through a sidewall **56** of the pin clamp. The guide pin can then be slidably moved in a transverse direction through the slot until the engagement portion **44** attaches and locks into the recessed portion **82** of the guide pin so as to positively retain and engage the guide pin within the slot.

As shown in more detail in phantom lines in Figure 3 and by arrow **17** in Figure 4, the one end of the guide pin **24** is preferably inserted in the slot **50** at the innermost portion **59** of the slot and is slidably moved in a transverse direction outward towards the outermost portion **57** until the guide pin is engaged and locked into position. It should be understood that regardless of the insertion point, e.g., whether at the innermost or outermost portion of the slot, the slot is preferably configured to allow one end of the guide pin to be inserted into the slot at an entry point. It will also be appreciated by those of skill in the art that the entry slot can also be positioned at the top, bottom or one of the sides perpendicular to the axial direction, if so desired.

As the guide pin **24** is moved transversely away from the insertion point in the direction indicated by arrow **17**, the opposed arms **45** of the engagement portion **44** of the pin clamp **40** positively engage the recessed portion **82** of the guide pin so as to retain the enlarged portion **80** of the guide pin within the enlarged portion of the slot.

For example, in a preferred embodiment illustrated in Figures 3 and 8, the enlarged portion of the slot **50** includes an internal cavity **48** adjacent the engagement portion **44** which receives the enlarged portion **80** of the guide pin **24** to prevent the guide pin from being advanced further through the pin clamp. The internal cavity is adjacent the engagement portion such that the opposed arms **45** of the engagement portion of the pin clamp can engage the recessed portion **82** of the guide pin while the enlarged portion of the guide pin is held within the internal cavity, thereby further securing the guide pin within the pin clamp.

As best illustrated by Figures 3 and 4, the pin clamp **40** of this embodiment is preferably configured to securely retain a pair of guide pins **24**. Thus, the pin clamp of this embodiment can include a pair of spanning arms **49** which define an open center cavity **51** through which the fiber ribbon **28** extends. The pin clamp of this embodiment also includes a bridge portion **46** extending across the open center cavity and connecting the pair of spanning arms. The pin clamp is preferably a molded component and, in one embodiment, is produced from a polyester thermoplastic material such as polybutylene terephthalate.

As described above, the slot **50** defined by the engagement portion **44** of the pin clamp **40** opens through the front face of the pin clamp to define a gap of a predetermined width, such as about 0.375 mm in one embodiment. The corresponding guide pin **24** of this exemplary embodiment has a recessed portion **82** having second predetermined dimensions in lateral cross-section which are either smaller than the width of the gap. Alternatively, the guide pin can have a recessed portion having second predetermined dimensions in lateral cross-section which are slightly larger, such as about 5% to about 10% larger, than the width of the gap such that the opposed arm **45** of the engagement portion **44** can frictionally engage the recessed portion of the guide pin. In addition, the corresponding guide pin of this exemplary embodiment has an enlarged portion **80** having first predetermined dimensions in lateral cross-section which are greater than the width of the gap such that the enlarged portion of the guide pin is locked within the pin clamp. For example, the corresponding guide pin can be generally cylindrical in shape such that the recessed portion has a diameter of about 0.39 mm to about 0.4 mm and the enlarged portion has a diameter of about 0.69 mm to about 0.7 mm.

As the exemplary dimensions of this embodiment of the ferrule assembly **20** demonstrate, the guide pin **24** of the present is preferably designed such that the ratio of the predetermined diameter of the recessed portion **82** to the predetermined diameter of the enlarged portion **80** is between about 0.40 and about 0.75. By maintaining the ratio of the respective diameters within in this range, the guide pin should have sufficient mechanical strength to withstand the anticipated load placed on the guide pin during service, while providing a recessed portion which is significantly smaller in lateral cross-section than the enlarged portion such that the engagement portion **44** of the pin clamp **40** can positively engage the recessed portion, thereby securing the guide pin within the ferrule assembly. While particular dimensions of an exemplary guide pin are provided above, these dimensions are merely for purposes of explanation and the guide pin and corresponding pin clamp can have a variety of sizes without departing from the spirit and scope of the present invention.

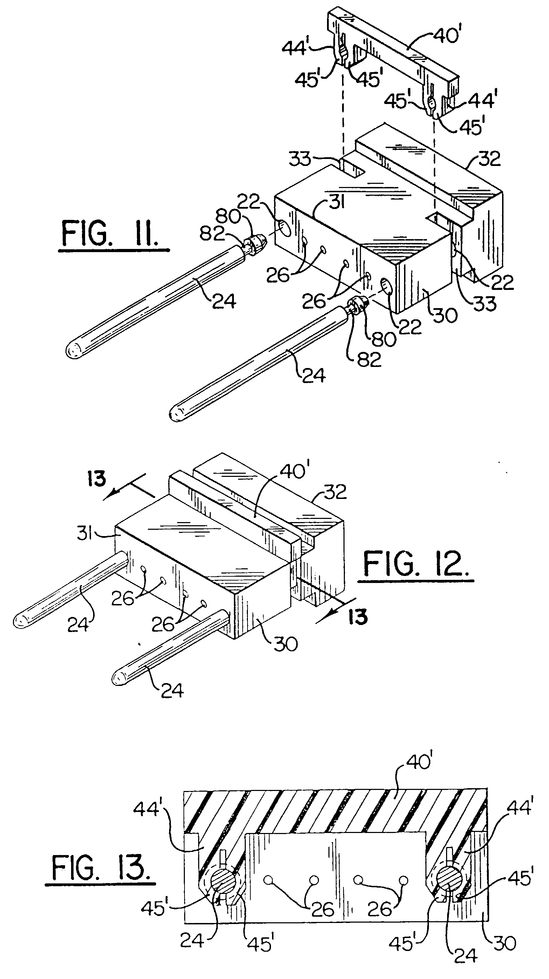

An alternative embodiment of a pin clamp **40'** having a pair of engagement portions **44'** for positively engaging respective ones of a pair of guide pins **24** is illustrated in Figures 11-13. As will be apparent to those of skill in the art, however, the pin clamp of this embodiment is not limited to a pair of engagement portions and may include a plurality of engagement portions, or even a single engagement portion. Although the pin clamp **40'** of Figures 11-13 will be described as an alternative to the pin clamp **40** of Figures 1-6, it is also anticipated that the pin clamp **40'** can be used in conjunction with the above described embodiment of a pin clamp **40** to thereby further increase the positive retention force with which the guide pin(s) are held.

Like the engagement portion **44** of the pin clamp **40** of Figures 1-6, the engagement portion **44'** of this embodiment of the pin clamp **40'** also comprises a pair of opposed arms **45'** which define a gap of a predetermined width therebetween. As described above, the gap width is less than the first predetermined dimensions (in lateral cross-section) of the enlarged portion **80** of the respective guide pin **24**. Stated differently, the gap is sized to snugly receive the recessed portion **82** of the guide pin, but is smaller than the enlarged portion of the guide pin to restrict any axial movement of the guide pin, thereby precluding the enlarged portion of the guide pin from axially moving through the smaller gap. Thus, the pin clamp of this embodiment also provides a positive retention force so as to restrict, if not eliminate, axial movement of the guide pin.

As best illustrated in Figures 11 and 12, the ferrule **30** of this embodiment can be configured to further define at least one window **33** which opens into a guide pin opening **22**. As described above, a guide pin **24** can then be inserted either from a front or rear face **31**, **32** of the ferrule so as to extend through the respective guide pin opening. Thus, the guide pin and, more preferably, the recessed portion **82** of the guide pin is externally exposed by the window defined in the ferrule. The pin clamp **40'** and, more particularly, the engagement portion **44'** of the pin clamp is configured to extend through the window and to fit over and around a suitably configured guide pin, thereby positively engaging the guide pin as shown in cross-section in Figure 13. It will therefore be appreciated that the pin clamp **40'** of this embodiment can be easily assembled to the ferrule by inserting the engagement portion through the window defined by the ferrule to extend over and around a guide pin and, more preferably, to engage a notched or grooved or recessed portion of the guide pin, to provide a positive retention force on the guide pin.

The ferrule **30** of this embodiment can define the window **33** in any number of relative positions. However, it is preferable that the guide pin **24** correspond to the design of the ferrule such that the recessed portion **82** of the guide pin is aligned with the window. Accordingly, the pin clamp **40'** can engage the recessed portion of the guide pin so as to hold the guide pin with even a greater retention force.

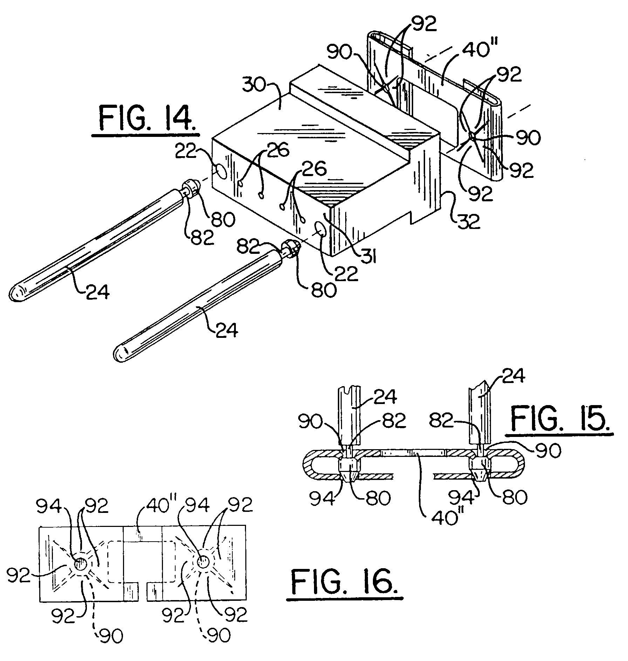

Yet another embodiment of a pin clamp **40''** according to the present invention is illustrated in Figures 14-16. As shown, the pin clamp of this embodiment includes at least one and, more preferably, a pair of openings **90** through which one end of a guide pin **24** can be inserted. The opening is preferably smaller than the enlarged portion **80** of the guide pin. However, the engagement portion **44''** of this embodiment of the pin clamp preferably includes a plurality of deflectable tabs **92** which permit the enlarged portion of the guide pin to be inserted through the smaller opening.

Once the enlarged portion **80** of the guide pin **24** has been inserted through the opening **90** defined by the pin clamp **40''**, the deflectable tabs **92** at least partially return to their original shape so as to engage the recessed portion **82** of the guide pin. Thus, once the tabs have been deflected and at least partially deformed, the opening defined by the now at least partially deformed tabs will still be smaller than the enlarged portion of the guide pin such that the guide pin will be securely retained by the pin clamp. For example, the opening can be generally circular and can have an original diameter of about 0.30 mm in order to receive and securely retain the guide pin described above which has a recessed portion with a diameter of about 0.39 mm to about 0.40 mm.

The pin clamp **40''** of this embodiment can also define a second opening **94**, aligned with the above-described opening **90**, which receives an end of the guide pin **24** in order to stabilize the relative position of the guide pin with respect to the pin clamp. For example, the pin clamp of this embodiment can be formed of a metal, such as brass or aluminum, which is bent to form the desired shape of the pin clamp as shown in Figures 14-16.

As described above, the pin clamps **40** of each of these embodiments are adapted to securely retain and engage one or more guide pins **24**. For example, referring now to Figure 7, one advantageous embodiment of a guide pin is illustrated. The guide pin of this embodiment is generally cylindrical with a nominal diameter of between about 0.69 mm and about 0.70 mm. The guide pin of this embodiment also has a length which corresponds to the length of the pinned components, such as the ferrule **30** and pin clamp, as well as the length by which the guide pin extends outwardly from the front face **31** of the ferrule. Therefore, it will be appreciated by one of skill in the art that the guide pin can have any number of suitable lengths but, in one embodiment, has a length of between about 7 mm and about 15 mm and, more preferably, has a length of about 11.5 mm. The guide pin is typically made from a stainless steel alloy material such as SS 420J2, but can be produced from any number of acceptable materials as will be appreciated by those of skill in the art.

In the embodiment of a cylindrical guide pin **24** illustrated in Figure 7, the guide pin includes a precision groove positioned circumferentially about the guide pin to form the recessed portion **82** of the guide pin. One exemplary guide pin defines a cylindrically shaped groove having a length of about 500 microns and a diameter of about 400 microns. In this example, the enlarged portion **80** of the guide pin also has a length of about 700 microns and a diameter of about 699 microns to 750 microns. Due to the configuration of the guide pin, the pin clamp **40** and, more particularly, the engagement portion **44** of the pin clamp can engage the recessed portion **82** so as to positively retain the guide pin.

As shown in Figure 7, the tips **84** of the guide pin **24** are also preferably frustoconical in shape so as to define an angle of about 20°- 40° and, more preferably, about 30° relative to the longitudinal axis of the guide pin. The frustoconical shape of the tips of the guide pin allows for easier insertion of the guide pin into the respective openings in the pin clamp **40**, ferrule **30** and mating connector **12b**.

In a second embodiment of a guide pin **24'** illustrated by Figure 10, the guide pin includes an enlarged portion in the shape of a nail head **77**. As will be appreciated by one of skill in the art, the guide pin of this configuration does not require a groove because the nail head is sufficiently large to prevent any axial movement relative to the engagement portion **44**, thereby also providing a positive retention and engagement force.

In yet a third embodiment of a guide pin as illustrated in Figure 9, the guide pin **24''** can have multiple recessed portions **82** or grooves positioned at predetermined locations along the length of the guide pin. As such, the guide pin can be selectively engaged by a pin clamp **40** at any number of positions along the length of the guide pin. Thus, the guide pin of this embodiment can be flexibly adapted for use with fiber optic connectors having components, such as ferrules **30**, pin clamps, and the like, which have a variety of different sizes. Additionally, this embodiment of a guide pin allows the length of the guide pin which extends beyond the front face **31** of the ferrule to be controllably adjusted. Another advantage of the guide pin of this embodiment is the increased positive retention and engagement force provided by multiple recessed portions which create multiple gripping surfaces defined by the edges of the recesses which act as barbs to increase the drag or friction force which must be overcome in order to displace the guide pin of this embodiment.

Therefore, according to the present invention, the ferrule assembly **20** includes a pin clamp **40** for securely engaging the guide pin **24** such that the guide pin does not become displaced, such as during subsequent connection and disconnection of a multi-fiber connector which incorporates the ferrule assembly. As a result, the connection and disconnection of a multi-fiber connector incorporating the ferrule assembly of the present invention will be more efficient since the guide pins will not become displaced and will not require time consuming replacement prior to the reassembly of a pair of aligned multi-fiber connectors. For example, the guide pin of one embodiment of the present invention defines a recessed portion **82**, such a groove, which can be positively engaged by the pin clamp so as to significantly increase the retention force with which the guide pin is held within the resulting ferrule assembly **20** in comparison with a conventional guide pin holding member which relies solely upon frictional engagement with the guide pin.

In the drawings and the specification, there has been set forth preferred embodiments of the invention and, although specific terms are employed, the terms are used in a generic and descriptive sense only and not for purpose of limitation, the scope of the invention being set forth in the following claims.

## Claims

1. A ferrule assembly comprising:
a ferrule having a front face and an opposed rear face, wherein said ferrule defines at least one guide pin opening and at least one fiber opening which extend between the opposed front and rear faces of said ferrule;
at least one lengthwise extending guide pin disposed within a respective guide pin opening defined by said ferrule, wherein said at least one guide pin has an enlarged portion having first predetermined dimensions in lateral cross-section and a recessed portion having second predetermined dimensions, less than the first predetermined dimensions, in lateral cross-section; and characterized by a pin clamp comprising an engagement portion that extends at least partially within the recessed portion of said at least one guide pin in the absence of external forces, wherein said pin clamp is disposed in a predetermined position relative to said ferrule such that said guide pin extends through a respective guide pin opening and outwardly from the front face of said ferrule.

2. A ferrule assembly according to Claim 1 wherein said ferrule further defines at least one window which opens into the guide pin opening within which said at least one guide pin is disposed to thereby expose the recessed portion of said at least one guide pin, and wherein the engagement portion of said pin clamp is adapted to engage the recessed portion of said at least one guide pin exposed within said window.

3. A ferrule assembly according to Claim 2 wherein the engagement portion of said pin clamp comprises a pair of opposed arms which define a gap of a predetermined width therebetween, and wherein the predetermined width of the gap defined by the pair of opposed arms is less than the first predetermined dimensions of the enlarged portion of said at least one guide pin.

4. A ferrule assembly according to Claim 1 wherein said pin clamp defines an internal cavity adjacent to the engagement portion for receiving the enlarged portion of said at least one guide pin while the engagement portion positively engages the recessed portion of said at least one guide pin to further secure said at least one guide pin to said pin clamp.

5. A ferrule assembly according to Claim 4 wherein the engagement portion of said pin clamp comprises a pair of opposed arms which define a gap of a predetermined width therebetween, and wherein the predetermined width of the gap defined by the pair of opposed arms is less than the first predetermined dimensions of the enlarged portion of said at least one guide pin.

6. A ferrule assembly according to Claim 1 wherein said pin clamp defines an opening through which the enlarged portion of said at least one guide pin is inserted, and wherein said engagement portion comprises a plurality of at least partially deflectable tabs which border the opening defined by said pin clamp and which positively engage the recessed portion of said at least one guide pin to further secure said at least one guide pin to said pin clamp.

7. A ferrule assembly according to Claim 1 wherein the recessed portion of said at least one guide pin comprises a groove extending circumferentially thereabout, and wherein the engagement portion of said pin clamp is received within the groove defined in said at least one guide pin to thereby positively engage said at least one guide pin.

8. A ferrule assembly according to Claim 1 wherein the enlarged portion of said at least one guide pin is cylindrical and has a first predetermined diameter in lateral cross-section, wherein the recessed portion of said at least one guide pin is cylindrical and has a second predetermined diameter in lateral cross-section, and wherein the ratio of the second predetermined diameter to the first predetermined diameter is between about 0.40 and about 0.75.

9. A lengthwise extending guide pin for aligning a pair of ferrule assemblies, the guide pin comprising:
an enlarged cylindrical portion having first predetermined diameter in lateral cross-section; and
a recessed cylindrical portion disposed along a media segment of the guide pin and adjacent said enlarged cylindrical portion, said recessed cylindrical portion having a second predetermined diameter, less than the first predetermined diameter, in lateral cross-section, characterized in that the ratio of the second predetermined diameter to the first predetermined diameter is between about 0.40 and about 0.75, and in that the second predetermined diameter of said recessed cylindrical portion is selected such that the guide pin is adapted to be positively engaged by one of the ferrule assemblies.

10. A guide pin according to Claim 9 characterized in that the recessed portion of the guide pin comprises a plurality of circumferentially extending grooves spaced lengthwise along the guide pin.

11. A guide pin according to Claim 9 further characterized by a pair of opposed end portions, wherein each end portion is frustoconical in shape to facilitate insertion of the guide pin within the ferrule assembly.

12. A guide pin extending lengthwise between first and second opposed ends for aligning a pair of ferrule assemblies, the guide pin characterized by:
an enlarged portion at the first end of the guide pin, said enlarged portion having first predetermined dimensions in lateral cross-section and shaped substantially as a nail head; and
a shaft portion extending between said enlarged portion and the second end of the guide pin, said shaft portion having second predetermined dimensions, less than the first predetermined dimensions, in lateral cross-section, wherein the second predetermined dimensions of said shaft portion are selected such that the guide pin is adapted to be positively engaged by one of the ferrule assemblies.
